# EUROPEAN PATENT APPLICATION

(11) **EP 4 220 806 A1**
(43) Date of publication of application: **02.08.2023**
(21) Application number: 21871450.9
(22) Date of filing: 18.09.2021
(51) Int. Cl.: H01M 10/058

(54) **METHOD AND SYSTEM FOR MANUFACTURING THERMAL COMPOSITE CELL**

(30) Priority: 24.09.2020 CN 202011017769
(71) Applicant: Jiangsu Katop Automation Co., Ltd, Liyang, Jiangsu 213300 (CN)
(72) Inventor: GONG, Yitao, Jiangsu 213300 (CN); XU, Shijing, Jiangsu 213300 (CN); ZHU, Yuan, Jiangsu 213300 (CN)
(74) Representative: Cabinet Laurent & Charras
(86) International application number: PCT/CN2021/119327
(87) International publication number: WO 2022/063080

(57) **Abstract**

Provided are a method and system for manufacturing a thermal composite cell. The method for manufacturing a thermal composite cell includes the following steps: unwinding a diaphragm and unwinding the diaphragm by a diaphragm unwinding device; hot-pressing and compositing electrode plates, hot-pressing and compositing a first electrode plate on a first side of the diaphragm, and hot-pressing and compositing a second electrode plate on a second side of the diaphragm; performing Z-shaped folding on the diaphragm and the electrode plates; and performing pressing to form a cell. The system for manufacturing a thermal composite cell includes a diaphragm unwinding device, an electrode plate conveying device, a heat-pressing and compositing device, a folding thimble, and a pressing device. The method and system for manufacturing a thermal composite cell have the advantages of a simple structure and low implementation costs, effectively improving the lamination accuracy and lamination quality and greatly improving the lamination efficiency and product safety in the actual application process.

## Description

### TECHNICAL FIELD

The present disclosure relates to the field of lithium battery production and processing and, in particular, to a method and system for manufacturing a thermal composite cell.

### BACKGROUND

In the production process of a lithium battery, the cell lamination process is a very important processing procedure, which plays a crucial role in the quality and production efficiency of the whole battery.

Conventional laminated cells include the Z-shaped lamination, the bag-making lamination, and the composite lamination. The Z-shaped lamination is a cell made by laminating positive and negative electrode plates repeatedly and alternately with a diaphragm in the middle for separating the positive electrode plate from the negative electrode plate. The impedance of the cell is small, but the electrode plates are easily staggered to cause a short circuit, and the battery manufactured by the cells has the disadvantage of poor safety. The bag-making lamination is generally made by aligning upper and lower surfaces of the positive electrode plate with the diaphragm, hot-pressing the periphery to form a positive electrode plate bag, and then performing repeated and alternate lamination with the negative electrode. The cell has the small impedance, but the problem of stagger of the positive and negative electrode plates is not completely solved, and the process is complicated and inefficient. The composite lamination is a cell made by hot-pressing and compositing the positive electrode plate (the negative electrode plate) and upper and lower diaphragms to form a lamination unit, then performing repeated lamination with an opposite electrode plate, and finally performing integral hot-pressing and compositing. The production efficiency of the cell is as low as the Z-shaped lamination and the bag-making lamination, and it is difficult to satisfy the rapid growth requirements for the power battery in the new energy market.

To sum up, the existing lamination method has the technical defects of easy stagger of electrode plates, poor battery safety, a complicated lamination process, low lamination efficiency, and high production costs, which limit the further development, promotion, and application of the art.

In view of this, an object of the present disclosure is to provide a new technical solution to solve the existing technical defects.

### SUMMARY

To overcome the shortcomings in the existing art, the present disclosure provides a method and system for manufacturing a thermal composite cell, solving the technical defects of the existing art, such as a complicated process, low lamination efficiency, easy lamination stagger, poor safety, and high implementation costs.

To solve the technical problems, the present disclosure adopts the technical solutions described below.

A method for manufacturing a thermal composite cell includes the steps described below.

In step S1, a diaphragm is unwound and the diaphragm is unwound by a diaphragm unwinding device.

In step S2, electrode plates are hot-pressed and composited, a first electrode plate is hot-pressed and composited on a first side of the diaphragm, and a second electrode plate is hot-pressed and composited on a second side of the diaphragm, where the first electrode plate and the second electrode plate have opposite polarities, and the first electrode plate and the second electrode plate are separately hot-pressed and composited on the two sides of the diaphragm.

In step S3, Z-shaped folding is performed on the diaphragm and the electrode plates, the diaphragm on which the first electrode plate and the second electrode plate are hot-pressed and composited is folded in a Z-shaped folding method, and the first electrode plate and the second electrode plate are alternately stacked to form a composite stack.

In step S4, pressing is performed so as to form a cell, and the composite stack completing the Z-shaped folding is pressed and formed into a cell product.

As an improvement of the preceding technical solutions, in step S2, a first hot-pressing and compositing device hot-presses and composites the first electrode plate on the first side of the diaphragm, and a second hot-pressing and compositing device hot-presses and composites the second electrode plate on the second side of the diaphragm, where both the first hot-pressing and compositing device and the second hot-pressing and compositing device have a pre-heating and pressing function and complete the hot-pressing and compositing of the first electrode plate and the second electrode plate through the pre-heating and pressing function.

As a further improvement of the preceding technical solutions, before the first electrode plate and the second electrode plate are hot-pressed and composited on the diaphragm, a first electrode plate rotating table conveys the first electrode plate to the first side of the diaphragm, a second electrode plate rotating table conveys the second electrode plate to the second side of the diaphragm, and after the first electrode plate and the second electrode plate are in place, the first electrode plate and the second electrode plate are hot-pressed and composited on the two sides of the diaphragm.

As a further improvement of the technical solutions, the first electrode plate rotating table has at least one first suction surface and rotationally conveys the first electrode plate to a preset hot-pressing and compositing position through the first suction surface, and the second electrode plate rotating table has at least one second suction surface and rotationally conveys the second electrode plate to a preset hot-pressing and compositing position through the second suction surface.

As a further improvement of the preceding technical solutions, both the first suction surface and the second suction surface suction and fix the electrode plates in a negative pressure suction manner.

As a further improvement of the preceding technical solutions, the first electrode plate rotating table has eight first suction surfaces, and eight independent negative pressure control devices in a one-to-one correspondence with the first suction surfaces are provided in the first electrode plate rotating table; the second electrode plate rotating table has eight second suction surfaces, and eight independent negative pressure control devices in a one-to-one correspondence with the second suction surfaces are provided in the second electrode plate rotating table.

As a further improvement of the preceding technical solutions, before the first electrode plate rotating table conveys the first electrode plate through the first suction surface, a first feeding manipulator conveys the first electrode plate from a first material container to a first electrode plate positioning platform, the first electrode plate positioning platform performs electrode plate positioning on the first electrode plate, the first electrode plate is positioned on the first electrode plate positioning platform, the first electrode plate positioning platform conveys the first electrode plate to a work station corresponding to the first suction surface and further lifts the first electrode plate in place, and the first electrode plate lifted in place is suctioned and fixed by the first suction surface; before the second electrode plate rotating table conveys the second electrode plate through the second suction surface, a second feeding manipulator conveys the second electrode plate from a second material container to a second electrode plate positioning platform, the second electrode plate positioning platform performs electrode plate positioning on the second electrode plate, the second electrode plate is positioned on the second electrode plate positioning platform, the second electrode plate positioning platform conveys the second electrode plate to a work station corresponding to the second suction surface and further lifts the second electrode plate in place, and the second electrode plate lifted in place is suctioned and fixed by the second suction surface.

As a further improvement of the preceding technical solutions, both the first electrode plate positioning platform and the second electrode plate positioning platform position the electrode plates through a continuous collision detection (CCD) positioning device, and both the first electrode plate positioning platform and the second electrode plate positioning platform are four-station rotating positioning platforms.

As a further improvement of the preceding technical solutions, after step S2 is completed, the first electrode plate and the second electrode plate are distributed in a longitudinally staggered manner on the two sides of the diaphragm.

As a further improvement of the preceding technical solutions, the diaphragm is pre-coated with composite glue; and in a process of hot-pressing and compositing the first electrode plate and the second electrode plate, the diaphragm pre-coated with the composite glue is pre-heated, the composite glue on the diaphragm is softened through a pre-heating operation, the first electrode plate and the second electrode plate are pressed onto corresponding positions on the diaphragm and kept pressed, and the softened composite glue bonds the first electrode plate and the second electrode plate to the corresponding positions on the two sides of the diaphragm.

As a further improvement of the preceding technical solutions, the diaphragm is subjected to a pre-folding operation before being fed onto the diaphragm unwinding device so that the diaphragm has pre-folds which are alternately arranged on the two sides of the diaphragm and form Z-shaped pre-folds, and a spacing between two adjacent pre-folds on the diaphragm matches width dimensions of the first electrode plate and the second electrode plate.

As a further improvement of the preceding technical solutions, in step S3, the diaphragm on which the first electrode plate and the second electrode plate are hot-pressed and composited is alternately folded in a Z shape through multiple folding thimbles, the diaphragm is provided between the first electrode plate and the second electrode plate, and after the folding is completed, in step S4, the composite stack that is alternately folded in the Z shape is pressed and formed into the cell product by a pressing device.

As a further improvement of the preceding technical solutions, after step S2 is completed, the first electrode plate 11 and the second electrode plate 12 are distributed in a longitudinally staggered manner on the two sides of the diaphragm 1.

A system for manufacturing a thermal composite cell includes a diaphragm unwinding device, an electrode plate conveying device, a hot-pressing and compositing device, a folding thimble, and a pressing device.

The diaphragm unwinding device is used for unwinding a diaphragm.

The electrode plate conveying device is used for conveying a first electrode plate and a second electrode plate to preset positions on two sides of the diaphragm.

The hot-pressing and compositing device is used for hot-pressing and compositing the first electrode plate and the second electrode plate that are conveyed in place by the electrode plate conveying device on a first side and a second side of the diaphragm, respectively, and after the first electrode plate and the second electrode plate are hot-pressed and composited on the first side and the second side of the diaphragm, the first electrode plate and the second electrode plate are distributed in a longitudinally staggered manner on the two sides of the diaphragm.

The folding thimble is used for abutting against preset pre-folds on the diaphragm and making the diaphragm on which the first electrode plate and the second electrode plate are hot-pressed and composited folded in a Z shape.

The pressing device is used for pressing and forming a composite stack folded in the Z shape into a cell product.

As a further improvement of the preceding technical solutions, the electrode plate conveying device includes a first electrode plate rotating table and a second electrode plate rotating table, where the first electrode plate rotating table and the second electrode plate rotating table are separately disposed on the two sides of the diaphragm and staggered, the first electrode plate rotating table has a first suction surface for suctioning the first electrode plate, the first electrode plate rotating table suctions the first electrode plate through the first suction surface and rotationally conveys the first electrode plate to a hot-pressing and compositing position corresponding to the first side of the diaphragm, the second electrode plate rotating table has a second suction surface for suctioning the second electrode plate, and the second electrode plate rotating table suctions the second electrode plate through the second suction surface and rotationally conveys the second electrode plate to a hot-pressing and compositing position corresponding to the second side of the diaphragm.

As a further improvement of the preceding technical solutions, the first electrode plate rotating table has eight first suction surfaces, and eight independently controllable negative pressure control devices in a one-to-one correspondence with the eight first suction surfaces are provided in the first electrode plate rotating table; the second electrode plate rotating table has eight second suction surfaces, and eight independently controllable negative pressure control devices in a one-to-one correspondence with the eight second suction surfaces are provided in the second electrode plate rotating table.

As a further improvement of the preceding technical solutions, both the first suction surface and the second suction surface are vacuum suction surfaces, and multiple vacuum suction holes are distributed on each of the first suction surface and the second suction surface.

As a further improvement of the preceding technical solutions, a first electrode plate positioning platform mating with the first electrode plate rotating table and a second electrode plate positioning platform mating with the second electrode plate rotating table are further included, where the first electrode plate positioning platform is used for positioning the first electrode plate, the second electrode plate positioning platform is used for positioning the second electrode plate, the first electrode plate rotating table suctions, through the first suction surface, the first electrode plate positioned on the first electrode plate positioning platform and rotationally conveys the first electrode plate to a preset hot-pressing and compositing position, and the second electrode plate rotating table suctions, through the second suction surface, the second electrode plate positioned on the second electrode plate positioning platform and rotationally conveys the second electrode plate to a preset hot-pressing and compositing position.

As a further improvement of the preceding technical solutions, both the first electrode plate positioning platform and the second electrode plate positioning platform position the electrode plates through a CCD positioning device, and both the first electrode plate positioning platform and the second electrode plate positioning platform are four-station rotating positioning platforms.

As a further improvement of the preceding technical solutions, one of the four work stations of the first electrode plate positioning platform or the second electrode plate positioning platform is provided with an electrode plate lifting device, the electrode plate lifting device on the first electrode plate positioning platform is used for lifting the first electrode plate upwards and abutting the first electrode plate against the first suction surface on the first electrode plate rotating table, and the electrode plate lifting device on the second electrode plate positioning platform is used for lifting the second electrode plate upwards and abutting the second electrode plate against the second suction surface on the second electrode plate rotating table.

As a further improvement of the preceding technical solutions, a first material container, a second material container, a first feeding manipulator, and a second feeding manipulator are further included, where the first material container and the second material container are used for carrying the first electrode plate and the second electrode plate, respectively, the first feeding manipulator is used for conveying the first electrode plate in the first material container to the first electrode plate positioning platform, and the second feeding manipulator is used for conveying the second electrode plate in the second material container to the second electrode plate positioning platform.

As a further improvement of the preceding technical solutions, the hot-pressing and compositing device includes a first hot-pressing and compositing device and a second hot-pressing and compositing device, where the first hot-pressing and compositing device is used for hot-pressing and compositing the first electrode plate on the first side of the diaphragm, and the second hot-pressing and compositing device is used for hot-pressing and compositing the second electrode plate on the second side of the diaphragm.

As a further improvement of the preceding technical solutions, the first hot-pressing and compositing device and the second hot-pressing and compositing device each include a heating module and a pressing module, where the heating module is used for pre-heating the diaphragm and softening pre-coated composite glue on the diaphragm, and the pressing module is used for pressing the first electrode plate or the second electrode plate on the softened composite glue on the diaphragm and keeping the first electrode plate or the second electrode plate pressed so that the first electrode plate and the second electrode plate are hot-pressed on the diaphragm.

As a further improvement of the preceding technical solutions, multiple folding thimbles are provided and staggered from high to low, and two adjacent folding thimbles face opposite to each other and are used for abutting against two adjacent pre-folds on the diaphragm.

The advantageous effects of the present disclosure are as follows: the present disclosure provides the method and system for manufacturing a thermal composite cell, and the cell manufactured through the cell lamination performed by the method and system for manufacturing a thermal composite cell has the advantages of good lamination accuracy, good lamination quality, and high lamination efficiency, facilitating automatic operation and good lamination overlap, improving the safety performance of the cell, and saving the procedure and implementation costs.

To sum up, the method and system for manufacturing a thermal composite cell solve the technical defects of the existing art, such as a complicated process, low lamination efficiency, easy lamination stagger, poor safety, and high implementation costs.

### BRIEF DESCRIPTION OF DRAWINGS

The present disclosure is further described below in conjunction with drawings and embodiments.
FIG. 1 is a flowchart of a method for manufacturing a thermal composite cell according to the present disclosure;
FIG. 2 is a flowchart illustrating a principle of a method for manufacturing a thermal composite cell according to the present disclosure;
FIG. 3 is a schematic diagram illustrating a principle of a system for manufacturing a thermal composite cell according to the present disclosure; and
FIG. 4 is a structural diagram of a composite stack according to the present disclosure.

### DETAILED DESCRIPTION

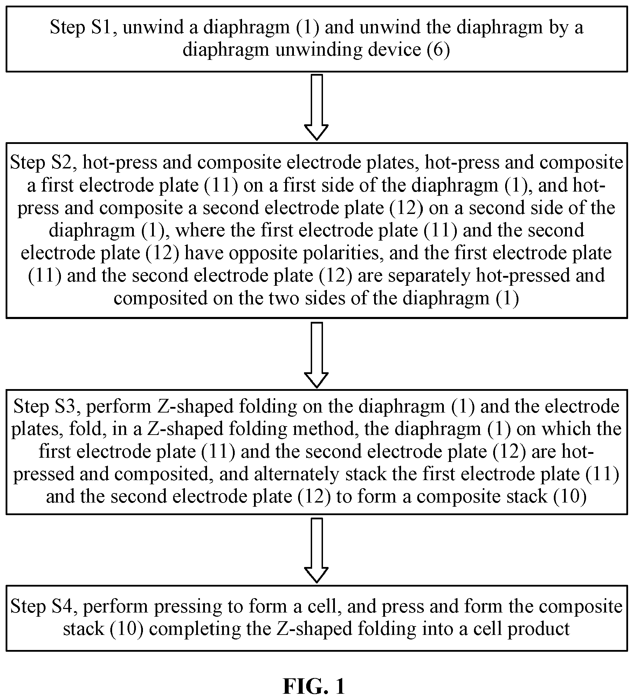

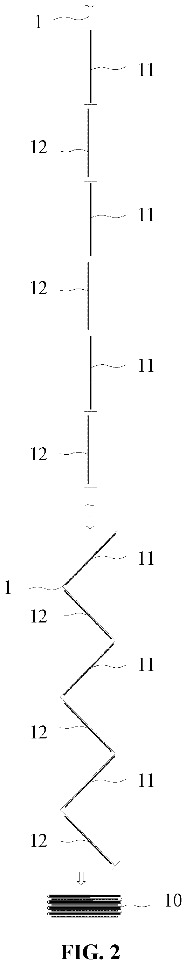

A concept, a specific structure and technical effects of the present disclosure are clearly and completely described below in conjunction with the embodiments and drawings, so as to fully understand the object, feature and effects of the present disclosure. Apparently, the embodiments described herein are part, not all, of the embodiments of the present disclosure. Based on the embodiments of the present disclosure, other embodiments obtained by those skilled in the art on the premise that no creative work is done are within the scope of the present disclosure. In addition, all coupling/connection relationships involved in the patent do not mean that components are directly connected, but mean that according to a specific implementation, coupling accessories are added or reduced so as to compose a better coupling structure. Referring to FIGS. 1, 2, 3, and 4, various technical features in the present disclosure can be combined interactively on the premise of not contradicting each other.

Specifically, referring to FIGS. 1, 2, and 4, a method for manufacturing a thermal composite cell includes the steps described below.

In step S1, a diaphragm 1 is unwound and the diaphragm is unwound by a diaphragm unwinding device 6.

In step S2, electrode plates are hot-pressed and composited, a first electrode plate 11 is hot-pressed and composited on a first side of the diaphragm 1, and a second electrode plate 12 is hot-pressed and composited on a second side of the diaphragm 1, where the first electrode plate 11 and the second electrode plate 12 have opposite polarities, and the first electrode plate 11 and the second electrode plate 12 are separately hot-pressed and composited on the two sides of the diaphragm 1. After step S2 is completed, the first electrode plate 11 and the second electrode plate 12 are distributed in a longitudinally staggered manner on the two sides of the diaphragm 1.

In step S3, Z-shaped folding is performed on the diaphragm 1 and the electrode plates, the diaphragm 1 on which the first electrode plate 11 and the second electrode plate 12 are hot-pressed and composited is folded in a Z-shaped folding method, and the first electrode plate 11 and the second electrode plate 12 are alternately stacked to form a composite stack 10.

In step S4, pressing is performed to form a cell, and the composite stack 10 completing the Z-shaped folding is pressed and formed into a cell product.

In step S3, the diaphragm 1 on which the first electrode plate 11 and the second electrode plate 12 are hot-pressed and composited is alternately folded in a Z shape through multiple folding thimbles 7, the diaphragm 1 is provided between the first electrode plate 11 and the second electrode plate 12, and after the folding is completed, in step S4, the composite stack 10 that is alternately folded in the Z shape is pressed and formed into the cell product by a pressing device.

In step S2, a first hot-pressing and compositing device 21 hot-presses and composites the first electrode plate 11 on the first side of the diaphragm 1, and a second hot-pressing and compositing device 22 hot-presses and composites the second electrode plate 12 on the second side of the diaphragm 1, where both the first hot-pressing and compositing device 21 and the second hot-pressing and compositing device 22 have a pre-heating and pressing function and complete the hot-pressing and compositing of the first electrode plate 11 and the second electrode plate 12 through the pre-heating and pressing function. The diaphragm 1 is pre-coated with composite glue; and in a process of hot-pressing and compositing the first electrode plate 11 and the second electrode plate 12, the diaphragm 1 pre-coated with the composite glue is pre-heated, the composite glue on the diaphragm 1 is softened through a pre-heating operation, the first electrode plate 11 and the second electrode plate 12 are pressed onto corresponding positions on the diaphragm 1 and kept pressed, and the softened composite glue bonds the first electrode plate 11 and the second electrode plate 12 to the corresponding positions on the two sides of the diaphragm 1.

Before the first electrode plate 11 and the second electrode plate 12 are hot-pressed and composited on the diaphragm 1, a first electrode plate rotating table 31 conveys the first electrode plate 11 to the first side of the diaphragm 1, a second electrode plate rotating table 32 conveys the second electrode plate 12 to the second side of the diaphragm 1, and after the first electrode plate 11 and the second electrode plate 12 are in place, the first electrode plate 11 and the second electrode plate 12 are hot-pressed and composited on the two sides of the diaphragm. The first electrode plate rotating table 31 has at least one first suction surface 311 and rotationally conveys the first electrode plate 11 to a preset hot-pressing and compositing position through the first suction surface 311, and the second electrode plate rotating table 32 has at least one second suction surface 321 and rotationally conveys the second electrode plate 12 to a preset hot-pressing and compositing position through the second suction surface 321. In this embodiment, both the first suction surface 311 and the second suction surface 321 suction and fix the electrode plates in a negative pressure suction manner. In this embodiment, the first electrode plate rotating table 31 has eight first suction surfaces 311, and eight independent negative pressure control devices in a one-to-one correspondence with the first suction surfaces 311 are provided in the first electrode plate rotating table 31; the second electrode plate rotating table 32 has eight second suction surfaces 321, and eight independent negative pressure control devices in a one-to-one correspondence with the second suction surfaces 321 are provided in the second electrode plate rotating table 32. In other embodiments, the number of the first suction surfaces 311 provided on the first electrode plate rotating table 31 and the number of the second suction surfaces 321 provided on the second electrode plate rotating table 32 may also be selected as appropriate according to the specific implementation, for example, six, five, and the like.

Before the first electrode plate rotating table 31 conveys the first electrode plate 11 through the first suction surface 311, a first feeding manipulator conveys the first electrode plate 11 from a first material container 41 to a first electrode plate positioning platform 51, the first electrode plate positioning platform 51 performs electrode plate positioning on the first electrode plate 11, the first electrode plate 11 is positioned on the first electrode plate positioning platform 51, the first electrode plate positioning platform 51 conveys the first electrode plate 11 to a work station corresponding to the first suction surface 311 and further lifts the first electrode plate 11 in place, and the first electrode plate 11 lifted in place is suctioned and fixed by the first suction surface 311; before the second electrode plate rotating table 32 conveys the second electrode plate 12 through the second suction surface 321, a second feeding manipulator conveys the second electrode plate 12 from a second material container 42 to a second electrode plate positioning platform 52, the second electrode plate positioning platform 52 performs electrode plate positioning on the second electrode plate 12, the second electrode plate 12 is positioned on the second electrode plate positioning platform 52, the second electrode plate positioning platform 52 conveys the second electrode plate 12 to a work station corresponding to the second suction surface 321 and further lifts the second electrode plate 12 in place, and the second electrode plate 12 lifted in place is suctioned and fixed by the second suction surface 321.

Both the first electrode plate positioning platform 51 and the second electrode plate positioning platform 52 position the electrode plates through a CCD positioning device, and both the first electrode plate positioning platform 51 and the second electrode plate positioning platform 52 are four-station rotating positioning platforms.

The diaphragm 1 is subjected to a pre-folding operation before being fed onto the diaphragm unwinding device 6 so that the diaphragm 1 has pre-folds which are alternately arranged on the two sides of the diaphragm 1 and form Z-shaped pre-folds, and a spacing between two adjacent pre-folds on the diaphragm 1 matches width dimensions of the first electrode plate 11 and the second electrode plate 12.

During the specific implementation of the present disclosure, the diaphragm 1 is preset with pre-folds. After the diaphragm 1 provided with the pre-folds is unwound by the diaphragm unwinding device 6, when the diaphragm 1 reaches the position of the first hot-pressing and compositing device 21, the first electrode plate rotating table 31 conveys the first electrode plate 11 to a matching position, and the first hot-pressing and compositing device 21 hot-presses and composites the first electrode plate 11 to a preset position on the diaphragm 1. Further, the second electrode plate rotating table 32 conveys the second electrode plate 12 to a matching position, and the second hot-pressing and compositing device 22 hot-presses and composites the second electrode plate 12 to a corresponding position on the diaphragm 1. The first electrode plate 11 and the second electrode plate 12 are staggered on the two sides of the diaphragm 1, and a middle position of the diaphragm 1 between the first electrode plate 11 and the second electrode plate 12 has a pre-fold. Further, diaphragms on which the first electrode plate 11 and the second electrode plate 12 are composited are stacked into the composite stack 10 in the Z-shaped folding method with the aid of a folding thimble 7, and finally the composite stack 10 is pressed and formed into the cell product by the pressing device.

In this embodiment, the first electrode plate 11 is a positive electrode plate, and the second electrode plate 12 is a negative electrode plate.

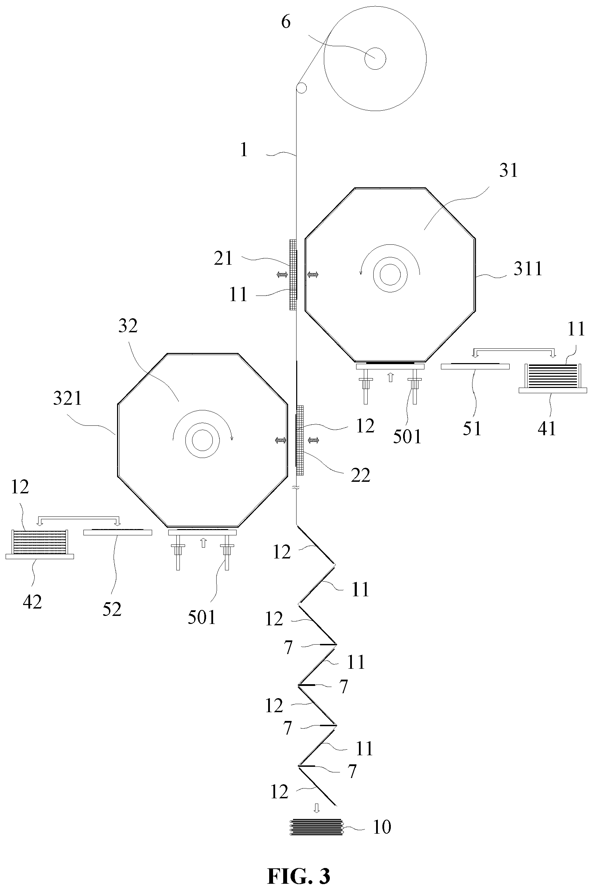

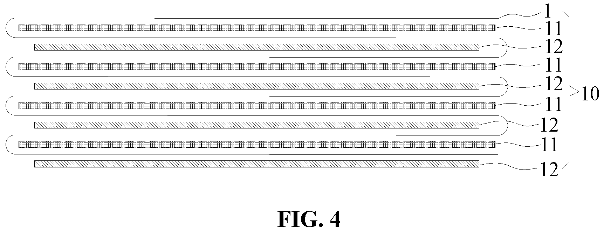

Referring to FIGS. 3 and 4, the present disclosure further provides a system for manufacturing a thermal composite cell. The system for manufacturing a thermal composite cell includes a diaphragm unwinding device 6, an electrode plate conveying device, a hot-pressing and compositing device, a folding thimble 7, and a pressing device.

A diaphragm unwinding device 6 is used for unwinding a diaphragm 1.

An electrode plate conveying device is used for conveying a first electrode plate 11 and a second electrode plate 12 to preset positions on two sides of the diaphragm 1.

Ahot-pressing and compositing device is used for hot-pressing and compositing the first electrode plate 11 and the second electrode plate 12 that are conveyed in place by the electrode plate conveying device on a first side and a second side of the diaphragm 1, respectively, and after the first electrode plate 11 and the second electrode plate 12 are hot-pressed and composited on the first side and the second side of the diaphragm 1, the first electrode plate 11 and the second electrode plate 12 are distributed in a longitudinally staggered manner on the two sides of the diaphragm 1.

The folding thimble 7 is used for abutting against preset pre-folds on the diaphragm 1 and making the diaphragm 1 on which the first electrode plate 11 and the second electrode plate 12 are hot-pressed and composited folded in a Z shape.

The pressing device is used for pressing and forming a composite stack 10 folded in the Z shape into a cell product.

The electrode plate conveying device includes a first electrode plate rotating table 31 and a second electrode plate rotating table 32, where the first electrode plate rotating table 31 and the second electrode plate rotating table 32 are separately disposed on the two sides of the diaphragm 1 and staggered, the first electrode plate rotating table 31 has a first suction surface 311 for suctioning the first electrode plate 11, the first electrode plate rotating table 31 suctions the first electrode plate 11 through the first suction surface 311 and rotationally conveys the first electrode plate 11 to a hot-pressing and compositing position corresponding to the first side of the diaphragm 1, the second electrode plate rotating table 32 has a second suction surface 321 for suctioning the second electrode plate 12, and the second electrode plate rotating table 32 suctions the second electrode plate 12 through the second suction surface 321 and rotationally conveys the second electrode plate 12 to a hot-pressing and compositing position corresponding to the second side of the diaphragm 1. Both the first suction surface 311 and the second suction surface 321 are vacuum suction surfaces, and multiple vacuum suction holes are distributed on each of the first suction surface 311 and the second suction surface 321. In this embodiment, the first electrode plate rotating table 31 has eight first suction surfaces 311, and eight independently controllable negative pressure control devices in a one-to-one correspondence with the eight first suction surfaces 311 are provided in the first electrode plate rotating table 31; the second electrode plate rotating table 32 has eight second suction surfaces 321, and eight independently controllable negative pressure control devices in a one-to-one correspondence with the eight second suction surfaces 321 are provided in the second electrode plate rotating table 32.

A first electrode plate positioning platform 51 mating with the first electrode plate rotating table 31 and a second electrode plate positioning platform 52 mating with the second electrode plate rotating table 32 are further included, where the first electrode plate positioning platform 51 is used for positioning the first electrode plate 11, the second electrode plate positioning platform 52 is used for positioning the second electrode plate 12, the first electrode plate rotating table 31 suctions, through the first suction surface 311, the first electrode plate 11 positioned on the first electrode plate positioning platform 51 and rotationally conveys the first electrode plate 11 to a preset hot-pressing and compositing position, and the second electrode plate rotating table 32 suctions, through the second suction surface 321, the second electrode plate 12 positioned on the second electrode plate positioning platform 52 and rotationally conveys the second electrode plate 12 to a preset hot-pressing and compositing position.

Both the first electrode plate positioning platform 51 and the second electrode plate positioning platform 52 position the electrode plates through a CCD positioning device, and both the first electrode plate positioning platform 51 and the second electrode plate positioning platform 52 are four-station rotating positioning platforms. One of the four work stations of the first electrode plate positioning platform 51 or the second electrode plate positioning platform 52 is provided with an electrode plate lifting device 501, the electrode plate lifting device 501 on the first electrode plate positioning platform 51 is used for lifting the first electrode plate 11 upwards and abutting the first electrode plate 11 against the first suction surface 311 on the first electrode plate rotating table 31, and the electrode plate lifting device 501 on the second electrode plate positioning platform 52 is used for lifting the second electrode plate 12 upwards and abutting the second electrode plate 12 against the second suction surface 321 on the second electrode plate rotating table 32.

The system for manufacturing a thermal composite cell further includes a first material container 41, a second material container 42, a first feeding manipulator, and a second feeding manipulator, where the first material container 41 and the second material container 42 are used for carrying the first electrode plate 11 and the second electrode plate 12, respectively, the first feeding manipulator is used for conveying the first electrode plate 11 in the first material container 41 to the first electrode plate positioning platform 51, and the second feeding manipulator is used for conveying the second electrode plate 12 in the second material container 42 to the second electrode plate positioning platform 52.

The hot-pressing and compositing device includes a first hot-pressing and compositing device 21 and a second hot-pressing and compositing device 22, where the first hot-pressing and compositing device 21 is used for hot-pressing and compositing the first electrode plate 11 on the first side of the diaphragm 1, and the second hot-pressing and compositing device 22 is used for hot-pressing and compositing the second electrode plate 12 on the second side of the diaphragm 1. The first hot-pressing and compositing device 21 and the second hot-pressing and compositing device 22 each include a heating module and a pressing module, where the heating module is used for pre-heating the diaphragm 1 and softening pre-coated composite glue on the diaphragm 1, and the pressing module is used for pressing the first electrode plate 11 or the second electrode plate 12 on the softened composite glue on the diaphragm 1 and keeping the first electrode plate 11 or the second electrode plate 12 pressed so that the first electrode plate 11 and the second electrode plate 12 are hot-pressed on the diaphragm 1.

Multiple folding thimbles 7 are provided and staggered from high to low, and two adjacent folding thimbles 7 face opposite to each other and are used for abutting against two adjacent pre-folds on the diaphragm 1.

The above is a specific description of preferred embodiments of the present disclosure. However, the present disclosure is not limited to the embodiments. Various equivalent modifications or alterations may further be made by those skilled in the art without departing from the spirit of the present disclosure. These equivalent modifications or alterations fall within the scope of the claims in the present application.

## Claims

1. A method for manufacturing a thermal composite cell, comprising:
step S1, unwinding a diaphragm (1) comprising unwinding the diaphragm (1) by a diaphragm unwinding device (6);
step S2, hot-pressing and compositing electrode plates comprising hot-pressing and compositing a first electrode plate (11) on a first side of the diaphragm (1), and hot-pressing and compositing a second electrode plate (12) on a second side of the diaphragm (1), wherein the first electrode plate (11) and the second electrode plate (12) have opposite polarities, and the first electrode plate (11) and the second electrode plate (12) are separately hot-pressed and composited on the two sides of the diaphragm (1);
step S3, performing Z-shaped folding on the diaphragm (1) and the electrode plates comprising folding, in a Z-shaped folding method, the diaphragm (1) on which the first electrode plate (11) and the second electrode plate (12) are hot-pressed and composited, and alternately stacking the first electrode plate (11) and the second electrode plate (12) to form a composite stack (10); and
step S4, performing pressing to form a cell comprising pressing and forming the composite stack (10) completing the Z-shaped folding into a cell product.

2. The method for manufacturing a thermal composite cell of claim 1, wherein in the step S2 , a first hot-pressing and compositing device (21) hot-presses and composites the first electrode plate (11) on the first side of the diaphragm (1), and a second hot-pressing and compositing device (22) hot-presses and composites the second electrode plate (12) on the second side of the diaphragm (1), wherein both the first hot-pressing and compositing device (21) and the second hot-pressing and compositing device (22) have a pre-heating and pressing function and complete the hot-pressing and compositing of the first electrode plate (11) and the second electrode plate (12) through the pre-heating and pressing function.

3. The method for manufacturing a thermal composite cell of claim 1, wherein before the first electrode plate (11) and the second electrode plate (12) are hot-pressed and composited on the diaphragm (1), a first electrode plate rotating table (31) conveys the first electrode plate (11) to the first side of the diaphragm (1), a second electrode plate rotating table (32) conveys the second electrode plate (12) to the second side of the diaphragm (1), and after the first electrode plate (11) and the second electrode plate (12) are in place, the first electrode plate (11) and the second electrode plate (12) are hot-pressed and composited on the two sides of the diaphragm (1).

4. The method for manufacturing a thermal composite cell of claim 3, wherein the first electrode plate rotating table (31) has at least one first suction surface (311) and rotationally conveys the first electrode plate (11) to a preset hot-pressing and compositing position through the first suction surface (311), and the second electrode plate rotating table (32) has at least one second suction surface (321) and rotationally conveys the second electrode plate (12) to a preset hot-pressing and compositing position through the second suction surface (321).

5. The method for manufacturing a thermal composite cell of claim 4, wherein both the first suction surface (311) and the second suction surface (321) suction and fix the electrode plates in a negative pressure suction manner.

6. The method for manufacturing a thermal composite cell of claim 4, wherein the first electrode plate rotating table (31) has eight first suction surfaces (311), and eight independent negative pressure control devices in a one-to-one correspondence with the first suction surfaces (311) are provided in the first electrode plate rotating table (31); the second electrode plate rotating table (32) has eight second suction surfaces (321), and eight independent negative pressure control devices in a one-to-one correspondence with the second suction surfaces (321) are provided in the second electrode plate rotating table (32).

7. The method for manufacturing a thermal composite cell of claim 4, wherein before the first electrode plate rotating table (31) conveys the first electrode plate (11) through the first suction surface (311), a first feeding manipulator conveys the first electrode plate (11) from a first material container (41) to a first electrode plate positioning platform (51), the first electrode plate positioning platform (51) performs electrode plate positioning on the first electrode plate (11), the first electrode plate (11) is positioned on the first electrode plate positioning platform (51), the first electrode plate positioning platform (51) conveys the first electrode plate (11) to a work station corresponding to the first suction surface (311) and further lifts the first electrode plate (11) in place, and the first electrode plate (11) lifted in place is suctioned and fixed by the first suction surface (311); before the second electrode plate rotating table (32) conveys the second electrode plate (12) through the second suction surface (321), a second feeding manipulator conveys the second electrode plate (12) from a second material container (42) to a second electrode plate positioning platform (52), the second electrode plate positioning platform (52) performs electrode plate positioning on the second electrode plate (12), the second electrode plate (12) is positioned on the second electrode plate positioning platform (52), the second electrode plate positioning platform (52) conveys the second electrode plate (12) to a work station corresponding to the second suction surface (321) and further lifts the second electrode plate (12) in place, and the second electrode plate (12) lifted in place is suctioned and fixed by the second suction surface (321).

8. The method for manufacturing a thermal composite cell of claim 7, wherein both the first electrode plate positioning platform (51) and the second electrode plate positioning platform (52) position the electrode plates through a CCD positioning device, and both the first electrode plate positioning platform (51) and the second electrode plate positioning platform (52) are four-station rotating positioning platforms.

9. The method for manufacturing a thermal composite cell of claim 1, wherein after the step S2 is completed, the first electrode plate (11) and the second electrode plate (12) are distributed in a longitudinally staggered manner on the two sides of the diaphragm (1).

10. The method for manufacturing a thermal composite cell of claim 1, wherein the diaphragm (1) is pre-coated with composite glue; and in a process of hot-pressing and compositing the first electrode plate (11) and the second electrode plate (12), the diaphragm (1) pre-coated with the composite glue is pre-heated, the composite glue on the diaphragm (1) is softened through a pre-heating operation, the first electrode plate (11) and the second electrode plate (12) are pressed onto corresponding positions on the diaphragm (1) and kept pressed, and the softened composite glue bonds the first electrode plate (11) and the second electrode plate (12) to the corresponding positions on the two sides of the diaphragm (1).

11. The method for manufacturing a thermal composite cell of claim 1, wherein the diaphragm (1) is subjected to a pre-folding operation before being fed onto the diaphragm unwinding device (6) so that the diaphragm (1) has pre-folds which are alternately arranged on the two sides of the diaphragm (1) and form Z-shaped pre-folds, and a spacing between two adjacent pre-folds on the diaphragm (1) matches width dimensions of the first electrode plate (11) and the second electrode plate (12).

12. The method for manufacturing a thermal composite cell of claim 1, wherein in the step S3, the diaphragm (1) on which the first electrode plate (11) and the second electrode plate (12) are hot-pressed and composited is alternately folded in a Z shape through a plurality of folding thimbles (7), the diaphragm (1) is provided between the first electrode plate (11) and the second electrode plate (12), and after the folding is completed, in the step S4, the composite stack (10) that is alternately folded in the Z shape is pressed and formed into the cell product by a pressing device.

13. The method for manufacturing a thermal composite cell of claim 1, wherein after the step S2 is completed, the first electrode plate (11) and the second electrode plate (12) are distributed in a longitudinally staggered manner on the two sides of the diaphragm (1).

14. A system for manufacturing a thermal composite cell, comprising:
a diaphragm unwinding device (6) for unwinding a diaphragm (1);
an electrode plate conveying device for conveying a first electrode plate (11) and a second electrode plate (12) to preset positions on two sides of the diaphragm (1);
a hot-pressing and compositing device, wherein the hot-pressing and compositing device is used for hot-pressing and compositing the first electrode plate (11) and the second electrode plate (12) that are conveyed in place by the electrode plate conveying device on a first side and a second side of the diaphragm (1), respectively, and after the first electrode plate (11) and the second electrode plate (12) are hot-pressed and composited on the first side and the second side of the diaphragm (1), the first electrode plate (11) and the second electrode plate (12) are distributed in a longitudinally staggered manner on the two sides of the diaphragm (1);
a folding thimble (7), wherein the folding thimble (7) is used for abutting against preset pre-folds on the diaphragm (1) and making the diaphragm (1) on which the first electrode plate (11) and the second electrode plate (12) are hot-pressed and composited folded in a Z shape; and
a pressing device for pressing and forming a composite stack (10) folded in the Z shape into a cell product.

15. The system for manufacturing a thermal composite cell of claim 14, wherein the electrode plate conveying device comprises a first electrode plate rotating table (31) and a second electrode plate rotating table (32), wherein the first electrode plate rotating table (31) and the second electrode plate rotating table (32) are separately disposed on the two sides of the diaphragm (1) and staggered, the first electrode plate rotating table (31) has a first suction surface (311) for suctioning the first electrode plate (11), the first electrode plate rotating table (31) suctions the first electrode plate (11) through the first suction surface (311) and rotationally conveys the first electrode plate (11) to a hot-pressing and compositing position corresponding to the first side of the diaphragm (1), the second electrode plate rotating table (32) has a second suction surface (321) for suctioning the second electrode plate (12), and the second electrode plate rotating table (32) suctions the second electrode plate (12) through the second suction surface (321) and rotationally conveys the second electrode plate (12) to a hot-pressing and compositing position corresponding to the second side of the diaphragm (1).

16. The system for manufacturing a thermal composite cell of claim 15, wherein the first electrode plate rotating table (31) has eight first suction surfaces (311), and eight independently controllable negative pressure control devices in a one-to-one correspondence with the eight first suction surfaces (311) are provided in the first electrode plate rotating table (31); the second electrode plate rotating table (32) has eight second suction surfaces (321), and eight independently controllable negative pressure control devices in a one-to-one correspondence with the eight second suction surfaces (321) are provided in the second electrode plate rotating table (32).

17. The system for manufacturing a thermal composite cell of claim 15, wherein both the first suction surface (311) and the second suction surface (321) are vacuum suction surfaces, and a plurality of vacuum suction holes are distributed on each of the first suction surface (311) and the second suction surface (321).

18. The system for manufacturing a thermal composite cell of claim 15, further comprising a first electrode plate positioning platform (51) mating with the first electrode plate rotating table (31) and a second electrode plate positioning platform (52) mating with the second electrode plate rotating table (32), wherein the first electrode plate positioning platform (51) is used for positioning the first electrode plate (11), the second electrode plate positioning platform (52) is used for positioning the second electrode plate (12), the first electrode plate rotating table (31) suctions, through the first suction surface (311), the first electrode plate (11) positioned on the first electrode plate positioning platform (51) and rotationally conveys the first electrode plate (11) to a preset hot-pressing and compositing position, and the second electrode plate rotating table (32) suctions, through the second suction surface (321), the second electrode plate (12) positioned on the second electrode plate positioning platform (52) and rotationally conveys the second electrode plate (12) to a preset hot-pressing and compositing position.

19. The system for manufacturing a thermal composite cell of claim 18, wherein both the first electrode plate positioning platform (51) and the second electrode plate positioning platform (52) position the electrode plates through a CCD positioning device, and both the first electrode plate positioning platform (51) and the second electrode plate positioning platform (52) are four-station rotating positioning platforms.

20. The system for manufacturing a thermal composite cell of claim 19, wherein one of the four work stations of the first electrode plate positioning platform (51) or the second electrode plate positioning platform (52) is provided with an electrode plate lifting device (501), the electrode plate lifting device (501) on the first electrode plate positioning platform (51) is used for lifting the first electrode plate (11) upwards and abutting the first electrode plate (11) against the first suction surface (311) on the first electrode plate rotating table (31), and the electrode plate lifting device (501) on the second electrode plate positioning platform (52) is used for lifting the second electrode plate (12) upwards and abutting the second electrode plate (12) against the second suction surface (321) on the second electrode plate rotating table (32).

21. The system for manufacturing a thermal composite cell of claim 18, further comprising a first material container (41), a second material container (42), a first feeding manipulator, and a second feeding manipulator, wherein the first material container (41) and the second material container (42) are used for carrying the first electrode plate (11) and the second electrode plate (12), respectively, the first feeding manipulator is used for conveying the first electrode plate (11) in the first material container (41) to the first electrode plate positioning platform (51), and the second feeding manipulator is used for conveying the second electrode plate (12) in the second material container (42) to the second electrode plate positioning platform (52).

22. The system for manufacturing a thermal composite cell of any one of claims 14 to 21, wherein the hot-pressing and compositing device comprises a first hot-pressing and compositing device (21) and a second hot-pressing and compositing device (22), wherein the first hot-pressing and compositing device (21) is used for hot-pressing and compositing the first electrode plate (11) on the first side of the diaphragm (1), and the second hot-pressing and compositing device (22) is used for hot-pressing and compositing the second electrode plate (12) on the second side of the diaphragm (1).

23. The system for manufacturing a thermal composite cell of claim 22, wherein the first hot-pressing and compositing device (21) and the second hot-pressing and compositing device (22) each comprise a heating module and a pressing module, wherein the heating module is used for pre-heating the diaphragm (1) and softening pre-coated composite glue on the diaphragm (1), and the pressing module is used for pressing the first electrode plate (11) or the second electrode plate (12) on the softened composite glue on the diaphragm (1) and keeping the first electrode plate (11) or the second electrode plate (12) pressed so that the first electrode plate (11) and the second electrode plate (12) are hot-pressed on the diaphragm (1).

24. The system for manufacturing a thermal composite cell of claim 22, wherein a plurality of folding thimbles (7) are provided and staggered from high to low, and two adjacent folding thimbles (7) face opposite to each other and are used for abutting against two adjacent pre-folds on the diaphragm (1).
